# EUROPEAN PATENT APPLICATION

(11) **EP 0 927 570 A1**
(43) Date of publication of application: **07.07.1999**
(21) Application number: 98124306.6
(22) Date of filing: 21.12.1998
(51) Int. Cl.: B01D 53/26

(54) **Air drier with cooling system for compressed air**

(30) Priority: 24.12.1997 IT UD970245
(71) Applicant: Calligaris, Livio, 34077 Ronchi dei Legionari (GO) (IT)
(72) Inventor: Calligaris, Livio, 34077 Ronchi dei Legionari (GO) (IT)
(74) Representative: Petraz, Gilberto Luigi

(57) **Abstract**

Air drier with cooling system for plants producing compressed air, associated at inlet with a pipe (15) to deliver air from the compressor and at outlet with a pipe (28) to deliver the dried air into the environment, the drier comprising a containing structure for heat exchange elements (16, 20) to cool/heat the air, defining inside itself processing chambers communicating with each other and with the air inlet/outlet pipes (15,28), the entire containing structure (11) being shaped like a double shell consisting of two substantially semi-elliptic half-shells (11a, 11b) coupled together and separated by a dividing plate (13), a first half-shell (11a) containing a pre-exchange element (16) for the first partial cooling of the air from the compressor and the second half-shell (11b) containing the second heat exchange element (20) to cool the air substantially to its dew point.

## Description

### FIELD OF THE INVENTION

This invention concerns an air drier with a cooling system for plants producing compressed air as set forth in the main claim.

The invention is employed to dry compressed air by cooling it in a cooling system to a temperature substantially near its dew point.

### BACKGROUND OF THE INVENTION

In the state of the art there are various types of air driers, employed in plants producing compressed air, by means of which the air arriving from the compressor is dried by processing in a cooling system before being re-introduced outside at ambient temperature.

Cooling driers such as these normally comprise a containing structure consisting of one or two tubes closed at the ends by air-tight welded bottoms inside which the heat exchange elements used to dry the air are housed.

The heat exchange elements normally comprise a first element consisting of a bundle of tubes which acts as a pre-exchange element to achieve a first lowering of the temperature of the air supplied by the compressor, and a second element, which may also consist of a bundle of tubes or a finned pack with circulating cooling fluid, which further lowers the temperature of the air and takes it substantially to dew point.

Then, after the separation of the water droplets which have formed during the passage through the second heat exchange element, the air is heated to ambient temperature and expelled outside.

In traditional embodiments,the two elements are arranged in respective tubular elements and there are means to take the flow of air from one tubular element to the other in alternation.

Recently there has been a proposal for an embodiment wherein a single tubular element, developed lengthwise, closed by two bottoms at the ends, contains the first heat exchange element in its upper, semi-cylindrical part and the second heat exchange element in its lower semi-cylindrical part.

The longitudinal development of the tubular elements needed to ensure a sufficient drying process entails great lengths, from 1500 to 2000 mm and more. This entails a greater space occupied longitudinally by the drier, and consequently the need for larger installation spaces, and great load losses along the transit of the flow of air, and also an imbalance in the heat exchange; all these factors lower the productivity of the drier and entail technological and operational problems.

Moreover, there is also an increase in the production costs because it needs a high number of structural components welded together, and this leads to an increase in production costs and times for driers such as exist at present.

A further problem is that the tubular conformation, developed lengthwise, reduces the expansion volumes available for the flow of air in the passage between the two heat exchange elements.

The present applicant has designed and embodied this invention to overcome the shortcomings of the state of the art and to obtain further advantages.

### SUMMARY OF THE INVENTION

The invention is set forth and characterized in the main claim, while the dependent claims describe other characteristics of the main embodiment.

The purpose of the invention is to provide a drier with a cooling system for plants producing compressed air which is compact, functional, economical, characterized by a considerable reduction in production costs and times, and with a higher productivity thanks to the reduction in the load losses and the increase in the net surface of heat exchange given the same volumes of air treated.

A further purpose is to increase the volume of the expansion zones of the flow of air when the air passes from one heat exchange element to the other.

The drier according to the invention comprises a containing structure consisting of two half-shells, semi-eliptic in shape or similar, arranged coupled together. The two half-shells are separated from each other by an intermediate dividing wall equipped with a plurality of holes, the function of which will be explained later.

According to a variant, the two half-shells are possibly separated by a ring of a height which can be varied according to the volume of air to be processed.

The containing structure defines inside itself three separate processing chambers through which the air to be dried passes after it arrives from the compressor.

The first chamber, which occupies substantially the whole of the first half-shell, houses a pre-exchange assembly, closed on all four sides and associated with the pipe which delivers the air from the compressor inside the drier.

According to a variant, the pre-exchange assembly is of the type with a finned pack with pipes and fins.

The function of the pre-exchange assembly is substantially to give a first lowering of the temperature of the air, from a value at inlet of around 45+55°C to a value at outlet of around 20÷25°C.

The air exiting from the pre-exchange assembly is sent by means of a pipe which goes through the dividing wall which separates the two half-shells to a second chamber made in the front portion of the second half-shell, where the air can expand a first time; then it is sent to a heat exchange assembly where cooling fluid circulates.

The heat exchange assembly is housed in the third chamber arranged in the remaining portion of the second half-shell at a position substantially below the pre-exchange assembly.

The third and the first chamber are inter-communicating by means of the holes in the dividing wall which separates them, distributed substantially so as to cover the entire extension of the pre-exchange assembly.

In the heat exchange assembly with the cooling fluid the temperature of the air is lowered brusquely until it reaches dew point, at around 2°C, with a resulting formation of droplets of water mixed with the flow of air.

According to a variant, in the heat exchange assembly the air circulates in the opposite direction to the cooling fluid.

At the outlet of the heat exchange assembly there is a filter element which retains the water droplets and lets only the dehumidified air pass; this air expands in the third chamber at the outlet of the heat exchange assembly and is conveyed, through the holes in the dividing wall, into the first chamber containing the pre-exchange assembly.

The flow of air laps the surface of the fins of the pre-exchange assembly and is partly heated due to the heat exchange with the air arriving from the compressor which passes in the tubes arranged between the fins of the assembly; the air is heated until, at the outlet of the drier, it reaches an ambient temperature at which it is sent to the points of use.

At the same time, the air in the tubes is subjected to the first cooling as described above.

The drier according to the invention, due to the particular double-shell shape of the containing structure, is therefore very compact inasmuch as the containing volume allows to house heat exchange elements of a substantially square shape, which reduce the longitudinal bulk and increase productivity thanks to the reduction in the load losses.

The two half-shells defining the containing structure ensure large expansion volumes at the outlet of the respective heat exchange elements during the step when the air passes from one chamber to another.

### BRIEF DESCRIPTION OF THE DRAWINGS

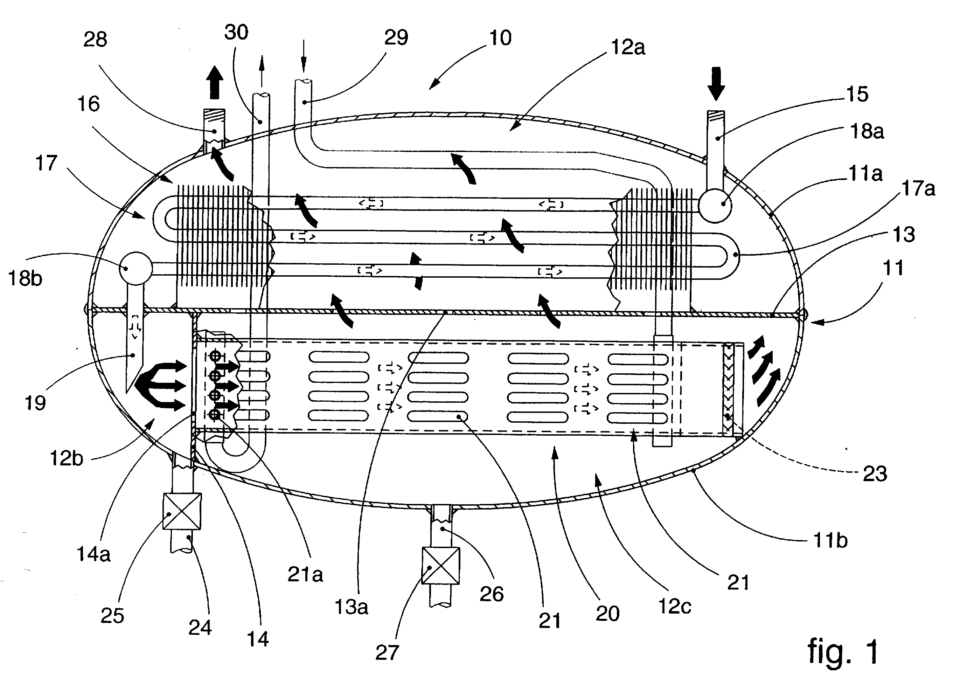

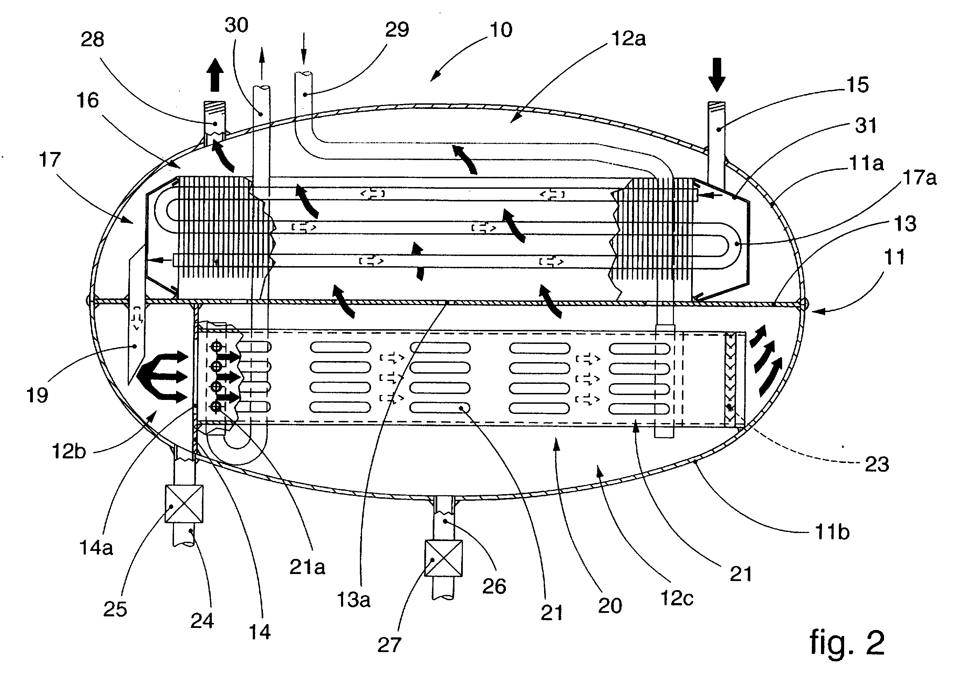

The attached Figures 1 and 2 are given as a non-restrictive example and show a cross section of a drier according to the invention in two preferential embodiments.

### DETAILED DESCRIPTION OF PREFERRED EMBODIMENT

The drier 10 according to the invention, employed to process hot, damp compressed air, comprises a containing structure 11 shaped like a double shell and consisting of two half-shells, substantially semi-elliptic in shape, respectively upper lla and lower llb, solidly associated together, in this case welded.

The containing structure 11 is subdivided inside into three inter-communicating chambers, the first 12a, the second 12b and the third 12c.

The first chamber 12a substantially occupies the whole upper half-shell 11a and is separated from the second 12b and the third 12c by means of a dividing plate 13.

The second chamber 12b occupies the front portion of the lower half-shell 11b and is separated from the third chamber 12c by means of a separating plate 14 substantially orthogonal to the dividing plate 13 and has an introduction hole 14a.

The third chamber 12c develops lengthwise in the lower half-shell 11b below the first chamber 12a, communicating therewith by means of a plurality of holes 13a in the dividing plate 13; the number of holes 13a is such as to reduce to a minimum the load losses as the air passes from the third chamber 12c to the first 12a.

Inside the first chamber 12a there is housed a pre-exchange assembly 16, in this case consisting of a pack of tubes-fins 17 with tubes 17a connected at one end to an inlet collector 18a and at the other end to an outlet collector 18b.

The inlet collector 18a is associated with an inlet pipe 15 connected to the compressor (not shown here) of the plant producing compressed air.

The inlet pipe 15, in a variant which is not shown here, is included in a position at the front of the drier 10 in correspondence with its short side.

The outlet collector 18b is associated with an intermediate pipe 19 which passes through the dividing plate 13, which puts the first chamber 12a in communication with the second chamber 12b, in correspondence with the introduction hole 14a.

The variant shown in Fig. 2 shows an embodiment which is used for large scale driers 10, comprising a large number of inlet pipes 15 which feed the pre-exchange assembly 16.

In this embodiment, the collectors 18a and 18b are not included, and the pack of tubes-fins 17 is enclosed inside an air-tight closed structure 31; the various inlet pipes 15, which convey the air inside the volume defined by the structure 17, and the intermediate pipes 19 which convey the air into the lower part of the drier 10, all engage with the said structure 31.

This embodiment is therefore more economical and easier to construct, and is used when there are more than, for example, five pipes 15.

Inside the third chamber 12c there is housed a heat exchange assembly 20 with cooling fluid circulating inside, in this case consisting of an evaporator with fins 21 wherein the cooling fluid circulates inside the circuit of tubes 21a in the opposite direction to that of the flow of air.

The cooling fluid is fed by a circuit comprising inlet pipes 29 and outlet pipes 30.

The finned evaporator 21 is attached at one end to the separating plate 14 in such a way as to face the introduction hole 14a of the said plate 14.

In this case, the finned evaporator 21 is closed, at the bottom and top, by plates 22 and is associated at the ends to a filter element 23 suitable to retain the water droplets transported by the flow of air.

The hot, damp air arriving from the compressor is introduced inside the pack of tubes-fins 17 by means of the inlet pipe 15.

Inside the pack of tubes-fins 17 the air is partly cooled and dehumidified and, at the outlet of the intermediate pipe 19, it has a temperature of about 22÷25°C.

Any possible condensation formed is conveyed by the intermediate pipe 19 into the second chamber 12b and from here it is discharged by means of a first discharge pipe 24 on the bottom thereof, in this case associated with an electrovalve 25.

The partly cooled and dehumidified air then passes from the second chamber 12b to the third 12c through the introduction hole 14a and through the whole extent of the finned evaporator 21, since it is confined within the said evaporator 21 by the plates 22.

In the finned evaporator 21 the air is subjected to heat exchange with the cooling fluid circulating in the circuit of tubes 21a, and its temperature is further lowered until it reaches at outlet a temperature of about 2°C, substantially corresponding to dew point.

The condensation which forms on the walls of the finned evaporator 21 is discharged by means of suitable holes on the bottom plate 22 and subsequently conveyed towards a second discharge pipe 26, which is also associated with an electrovalve 27.

After it has passed through the filter element 23 which retains the water droplets, the cool, dry air exiting from the finned evaporator 21 is conveyed through the holes 13a of the dividing plate 13, and passes inside the first chamber 12a, outside the tubes 17a of the pack of tubes-fins 17.

As the flow of cool air passes over the surface of the fins, it is heated due to the heat exchange which occurs with the hot air passing in the tubes 17a, which in turn is cooled.

The air can thus be expelled to the outside, by means of an outlet terminal 28, at a temperature of about 18+20°C.

The drier 10 according to the invention therefore has a longitudinal development which is much less than that of driers known to the art; this allows to house heat exchange elements 16, 20 of a substantially square conformation which increase the heat exchange yield due to the reduced load losses and a more balanced heat exchange given the same volumes of air processed.

The greater expansion volumes of the air at outlet from the exchange elements 16, 20 also contribute to a greater drying efficiency.

It is extremely easy and economical to make, and also to test and certify, the drier 10, since it is only necessary to weld together two half-shells which can already be certified in themselves, and since there are no tubular elements which are bulky and difficult to handle industrially.

## Claims

1. Air drier with cooling system for plants producing compressed air, associated at inlet with a pipe (15) to deliver air from the compressor and at outlet with a pipe (28) to deliver the dried air into the environment, the drier comprising a containing structure for heat exchange elements (16, 20) to cool/heat the air, defining inside itself processing chambers communicating with each other and with the air inlet/outlet pipes (15,28), the drier being characterized in that the entire containing structure (11) is shaped like a double shell consisting of two half-shells (11a, 11b) substantially semi-eliptic coupled together and separated by a dividing plate (13), a first half-shell (11a) containing a pre-exchange element (16) for the first partial cooling of the air from the compressor and the second half-shell (11b) containing the second heat exchange element (20) to cool the air substantially to its dew point.

2. Drier as in Claim 1, characterized in that the inner volume of the containing structure (11) is divided into three distinct and separate chambers (12a, 12b, 12c), the first chamber (12a) occupying substantially the first half-shell (11a) and containing the pre-exchange element (16), the second chamber (12b) being arranged in the front portion of the second half-shell (11b) and communicating with the first chamber (12a) by means of a pipe (19), and the third chamber (12c) occupying the remaining portion of the second half-shell (11b) and containing the heat exchange element (20), the third chamber (12c) communicating with the second chamber (12b) by means of an introduction hole (14a) and with the first chamber (12a) by means of a plurality of holes (13a) made in the dividing plate (13).

3. Drier as in Claim 1 or 2, characterized in that the heat exchange elements (16, 20) have a substantially square conformation.

4. Drier as in the previous claims, characterized in that it has large volume expansion zones at outlet from the heat exchange elements (16, 20).

5. Drier as in the previous claims, characterized in that at the end of the heat exchange element (20) there is an element to retain the droplets (23).

6. Drier as in the previous claims, characterized in that the heat exchange element (20) is an exchange assembly, closed at the sides, with cooling fluid circulating in the opposite direction to the flow of air.

7. Drier as in the previous claims, characterized in that the pre-exchange element (16) consists of a pack of tubes-fins (17) with which the air arriving from the compressor is cooled by the air supplied by the exchange element (20), which in turn is heated due to the heat exchange with the air from the compressor.

8. Drier as in Claim 7, characterized in that the pack of tubes-fins (17) has at inlet and at outlet respective inlet and outlet collectors (18a, 18b).

9. Drier as in Claim 7, characterized in that the pack of tubes-fins (17) is enclosed inside an air-tight closed structure.

10. Drier as in the previous claims, characterized in that the second (12b) and third (12c) chamber include means to discharge condensation (24, 26).

11. Drier as in the previous claims, characterized in that the two half-shells (11a, 11b) are separated by a ring, the height of which can be varied according to the volume of air to be processed.
